# EUROPÄISCHE PATENTSCHRIFT

(11) **EP 3 126 933 B1**
(45) Veröffentlichungstag und Bekanntmachung des Hinweises auf die Patenterteilung: **06.06.2018**
(21) Anmeldenummer: 15709847.6
(22) Anmeldetag: 13.03.2015
(51) Int. Cl.: G06F 3/01, B60K 37/06, B60K 35/00, G06F 3/03, B60W 50/10

(54) **GESTENBEWERTUNGSSYSTEM, VERFAHREN ZUR GESTENBEWERTUNG UND FAHRZEUG**
GESTURE EVALUATION SYSTEM, METHOD FOR EVALUATING GESTURES, AND VEHICLE
SYSTÈME D'ÉVALUATION DE GESTES, PROCÉDÉ D'ÉVALUATION DE GESTES ET VÉHICULE

(30) Priorität: 31.03.2014 DE 102014004675
(43) Veröffentlichungstag der Anmeldung: 08.02.2017
(73) Patentinhaber: Audi AG, 85045 Ingolstadt (DE)
(72) Erfinder: SCHLITTENBAUER, Michael, 85055 Ingolstadt (DE); ROEHDER, Martin, 85049 Ingolstadt (DE); BOHRER, Lorenz, 80333 München (DE)
(86) Internationale Anmeldenummer: PCT/EP2015/000568
(87) Internationale Veröffentlichungsnummer: WO 2015/149914

(56) Entgegenhaltungen:
- EP-A1- 2 575 007
- WO-A1-2013/037082
- US-A1- 2013 080 371
- US-A1- 2013 155 237

## Beschreibung

Die Erfindung betrifft ein Gestenbewertungssystem und ein Verfahren zur Bewertung einer Geste. Ferner betrifft die Erfindung ein Fahrzeug.

Es gibt derzeit die Tendenz, dass man in Fahrzeugen Systeme mit optischen Sensoren zur Gestenerkennung einsetzt, um installierte Geräte im Fahrzeug zu bedienen. Man unterscheidet hierbei zwischen Gesten zur Aktivierung von Geräten und Gesten zur Bedienung von Geräten. Ein Beispiel hierzu beschreibt DE 20 2012 005 255 U1. Dort wird eine Bedienvorrichtung für ein Fahrzeug vorgeschlagen mit einer Gestenüberwachungseinheit und einer Betätigungseinheit, um eine zugeordnete Vorrichtung zu betätigen. Die Gestenüberwachungseinheit ist ausgelegt, um nicht-taktile Gesten eines Benutzers zu erfassen. Ferner wird die Bedienvorrichtung in einen Betriebszustand versetzt, wenn die Gestenüberwachungseinheit eine nicht-taktile Aktivierungsgeste erfasst, wobei sich die Aktivierungsgeste von einer Betätigungsgeste unterscheidet.

Aus dem Bereich der Social Media ist bekannt, Inhalte zu bewerten. Hierbei wird oft ein Online-Inhalt, wie ein Bild oder ein Status Update, bewertet, indem auf einer Anzeigenoberfläche eine Like-Taste bzw. ein Like-Button gedrückt wird. Beim Drücken der Like-Taste gibt ein Benutzer eine positive Bewertung zu einem Online-Inhalt ab, der ihm zuvor zur Verfügung gestellt wurde, beispielsweise auf einer Internetseite. Bisher sind Bewertungen anhand von Gesten innerhalb eines Fahrzeug-Managementsystems eher unüblich.

Das Dokument US 2013/0080371 A1 offenbart ein System und ein Verfahren zur Empfehlung von Inhalten im Fahrzeug. Das System weist ein Aggregator-Modul, ein Modellierungsmodul und ein Empfehlungsmodul auf. Das Aggregator-Modul sammelt Inhaltsdaten, die Inhalte, wie ein Musik-, ein Nachrichtenprogramm usw. beschreiben. Das Aggregator-Modul sammelt auch Situationsdaten, die eine Umgebung beschreiben, in der der Inhalt einem Benutzer empfohlen worden ist, und Rückmeldungsdaten, die eine Benutzerantwort auf auf die Empfehlung beschreiben. Das Modellierungsmodul erzeugt ein Inhaltspräferenzmodell. Das Inhaltspräferenzmodell repräsentiert die dynamischen Inhaltspräferenzen des Benutzers zumindest teilweise basierend auf den gesammelten Daten. Das Empfehlungsmodul erzeugt eine erste Inhaltsempfehlung zumindest teilweise basierend auf dem Inhaltspräferenzmodell.

Das Dokument EP 1 830 244 A2 offenbart ein Verfahren und eine Vorrichtung zum Betreiben von zumindest zwei Funktionskomponenten eines Systems, bei dem eine der Funktionskomponenten zum weiteren Bedienen durch zumindest ein akustisches Signal ausgewählt wird, welches der Funktionskomponente spezifisch zugeordnet wird, und eine Funktion und/oder ein Betriebszustand einer ausgewählten Funktionskomponente abhängig von Gesten eines Bedieners eingestellt wird, wobei eine vorgebbare Mehrzahl unterschiedlicher Gesten für das Einstellen einer Funktionskomponente zugrunde gelegt wird und zumindest eine der Gesten bei beiden Funktionskomponenten einer jeweils komponentenspezifischen Einstellung einer Funktion und/oder einem Betriebszustand zugeordnet wird, und abhängig von einem Erfassen einer Geste durch eine Erfassungsvorrichtung eine der erfassten Geste zugeordnete Funktion und/oder ein Betriebszustand der ausgewählten Funktionskomponente eingestellt wird.

Bisher werden Funktionen im Fahrzeug durch Betätigung definierter Funktionstasten aufgerufen. Um Tastenbetätigungen zu sensieren ist derzeit je Taste ein elektrischer oder kapazitiver Schalter notwendig. Funktionen sind rein örtlich betrachtet auf die Oberfläche des mechanischen Tasters begrenzt. Bisher können beispielsweise Musiktitel oder Tracks auf Multimediaabspielgeräten, wie Smartphones, bewertet werden, um so automatisierte Playlistkonfigurationen mit Bewertungskriterien zu versehen. Allerdings ist bisher in einem Fahrzeug keine Taste für eine solche Funktion eingebaut und die Funktion ist somit nicht umgesetzt.

Dies hat den Nachteil, dass beispielsweise kein Kriterium für automatisierte Playlistkonfigurationen in einem Fahrzeug vorhanden ist. Eine Funktionalität von Multimediaabspielgeräten ist nicht durchgängig bis ins Fahrzeug vorhanden.

Es liegt daher der Erfindung die Aufgabe zugrunde in einem Fahrzeug Bewertungen abgeben zu können.

Diese Aufgabe wird mit einem Gestenbewertungssystem in einem Fahrzeug gelöst. Das Gestenbewertungssystem weist ein optisches System auf, das ausgebildet ist, um eine Geste zu erkennen. Ferner weist das Gestenbewertungssystem eine Verarbeitungseinheit auf, die mit dem optischen System gekoppelt ist und die ausgebildet ist, um die erkannte Geste auszuwerten. Zusätzlich weist das Gestenbewertungssystem eine Verwertungseinheit auf, die ausgebildet ist, um eine Bewertung, die aus der Geste erkannt wurde, zusammen mit einer bewerteten Information abzuspeichern.

Es wird eine Bewertungsgeste verwendet, d.h. eine Geste, die eine Bewertung klassifiziert. Die Bewertung kann sich auf verschiedene Anwendungen beziehen, beispielsweise kann ein Musiktitel, ein Ort, ein Restaurant, eine Sehenswürdigkeit oder ähnliches bewertet werden. Die ist möglich, da die Bewertungsgeste anhand einer installierten Kamera aufgenommen wird und diese Kamera mit einer weiteren technischen Einheit im Fahrzeug zusammenwirkt, beispielsweise dem Entertainmentsystem, insbesondere dem Audiosystem, oder dem Navigationssystem. Wird beispielsweise ein Musiktitel abgespielt, so kann während des Abspielens eine Bewertung erfolgen, ohne dass man einen Bedienknopf betätigen muss, sondern lediglich durch eine Bewertungsgeste. Diese Bewertungsgeste wird von dem optischen Aufnahmesystem im Fahrzeug erkannt und wird an eine entsprechende Auswerteeinheit weitergeleitet, die mit dem Audiosystem in Verbindung steht, so dass zu dem Musiktitel eine Information abgespeichert wird, die durch die Bewegungsgeste initialisiert wird.

Das Gestenbewertungssystem stellt somit sicher, dass eine Bewertungsgeste eines Fahrzeuginsassen erkannt wird und die Bewertung zusammen mit der bewerteten Information abgespeichert wird. Die Verarbeitungseinheit erkennt die Bewertungsgeste, beispielsweise mit Hilfe einer Time of Flight Kamera, die in dem Fahrzeug installiert ist und die Verwertungseinheit weist einen Speicher auf, um die bewertete Information abzuspeichern. Es wird demnach berührungslos eine Bewertung abgegeben, indem der Insasse des Fahrzeugs eine Bewertungsgeste bereitstellt. Es können verschiedene Muster in dem Gestenbewertungssystem hinterlegt werden, so dass unterschiedliche Bewertungsgesten erkannt werden können.

Es sind aus dem Stand der Technik Steuergesten bekannt, mit denen ohne Berührung ein technisches Gerät bedienbar ist. Im vorliegenden Fall steht die Bedienung nicht im Vordergrund, sondern es wird eine echte Bewertung angestrebt, d.h. man möchte zusätzliche Information einem System mitteilen, daher ist zwischen einem Bedienvorgang und einem Bewertungsvorgang zu unterscheiden. Ein Bedienvorgang kann im Anschluss an den Bewertungsvorgang zusätzlich erfolgen.

In einer Ausführungsform kann vorgesehen sein, dass die Verwertungseinheit Teil eines Fahrzeug-Managementsystems ist. Auf diese Weise ist es möglich, mit einer zentralen Einheit Informationen bereitzustellen und diese nach einer Bewertung zusammen mit der Bewertung für spätere Anwendungen zu hinterlegen. So kann beispielsweise eine Audioanlage des Fahrzeugs mit dem Gestenbewertungssystem verbunden sein, um Musiktitel bewertet zu hinterlegen. Somit ist es möglich, individuell jeder Person im Fahrzeug eine eigene Bewertung zu hinterlegen, die abgerufen werden kann, sobald die Person von dem Fahrzeug-Managementsystems erkannt wurde. Ferner kann vorgesehen werden, dass das Gestenbewertungssystem mit dem Internet verbindbar ist, so dass Informationen vom Internet ins Fahrzeug gelangen können, um dort bewertet zu werden und/oder Informationen vom Fahrzeug in das Internet gesendet werden, um dort gespeichert und veröffentlicht zu werden, beispielsweise auf einer Facebook-Seite. Ferner kann das Fahrzeug-Managementsystems mit einem Cloud-System verbunden sein, die Informationen speichert und bei Abruf zur Verfügung stellt.

In einem Ausführungsbeispiel kann vorgesehen werden, dass die erkannte Geste ein aufgerichteter Daumen ist. Vorzugsweise wird mit dem Gestenbewertungssystem ein rechter Daumen einer Person erkannt. Diese Geste wird als positive Bewertung definiert, insbesondere als "iLike"-Geste. Wird gerade ein Musikstück abgespielt, so kann dieses "geliked" werden. Andere Informationen sind ebenfalls dazu geeignet "geliked" zu werden, d.h. positiv bewertet zu werden.

In einem weiteren Ausführungsbeispiel kann vorgesehen sein, dass die Information eine Information ist ausgewählt aus einem Musiktitel, einem Ort, einer Dienstleistungseinrichtung, eines Bildes, einer Grafik, einer Statusinformation, einer physikalischen Größe, eines Messwertes, eines Geräusches und eines Vorschlags. Solche Informationen können individualisiert werden, indem für einen Nutzer eine Bewertung zusammen mit der Information abgespeichert wird. Zu einem späteren Zeitpunkt kann die Bewertung verwendet werden, um beispielsweise ein bevorzugtes Musikstück oder eine bevorzugte Musikrichtung in dem Audiosystem des Fahrzeugs abzuspielen. Ferner kann das Gestenbewertungssystem mit einem Navigationsgerät in Verbindung stehen, so dass Orte, Restaurants, Sehenswürdigkeiten oder ähnliches bewertet werden kann.

In einem weiteren Ausführungsbeispiel kann vorgesehen werden, dass die Information auf einer Anzeigevorrichtung des Fahrzeugs bereitgestellt wird. Hierbei kann eine Anzeigevorrichtung eine Bedienkonsole im Fahrzeug sein. Ferner kann die Anzeigevorrichtung auf eine Projektionsvorrichtung sein, die im Raum die Information zur Verfügung stellt, ohne dass eine definierte Anzeigevorrichtung vorhanden ist. Ferner kann die Anzeigevorrichtung ein Display sein, das im Fahrzeug installiert ist und Teil des Fahrzeuginformationssystems ist.

Mit Vorteil kann vorgesehen werden, dass mit dem Gestenbewertungssystem eine Zeitdauer einer Geste erkennbar ist und in Abhängigkeit der Zeitdauer der Geste eine weitere Funktion des Gestenbewertungssystem aktivierbar ist. Eine weitere Funktion kann beispielsweise eine Rangfolge oder ein Ranking sein, so dass die Information abgestuft bewertet werden kann. Hierzu können beispielsweise eine unterschiedliche Anzahl von Sternen vergeben werden, um eine Differenzierung zwischen positiv bewerteten Informationen zu ermöglichen. Eine weitere Funktion des Gestenbewertungssystem kann auch das Einleiten eines Bedienvorgangs sein, das sich an die Bewertung anschließt. Der Bedienvorgang kann beispielsweise eine installierte Einrichtung im Fahrzeug betreffen, wie die Klimaanlage oder die Audioanlage bzw. Entertainment-Anlage einschließlich Videos. Wird die Bewertungsgeste beispielsweise mehr als fünf Sekunden von einer Person bereitgestellt, so kann dies bedeuten, das noch eine weitere Bedienung eines Gerätes erwünscht ist, beispielsweise einen Menüpunkt auszuwählen.

Ferner wird die Aufgabe der Erfindung mit einem Verfahren zum Bewerten von Information gelöst, wobei die Information von einem installierten Gerät in einem Fahrzeug bereitgestellt wird. Das Verfahren weist ein Bereitstellen einer Information in einem Fahrzeug auf. Ferner weist das Verfahren ein Erkennen einer Geste auf, die sich auf die bereitgestellte Information bezieht. Das Verfahren weist ferner ein Auswerten der Geste als Bewertung in Bezug auf die bereitgestellte Information und ein Speichern der Bewertung zusammen mit der bereitgestellten Information auf.

Das Verfahren stellt somit eine berührungslose Bewertungsmöglichkeit in einem Fahrzeug bereit.

In einem Ausführungsbeispiel kann bei dem Verfahren ein Erkennen einer Zeitdauer einer Bewertungsgeste und ein Aktivieren einer weiteren Funktion in Abhängigkeit der Zeitdauer vorgesehen werden. Die weitere Funktion kann beispielsweise eine Bedienung einer Vorrichtung in oder außerhalb des Fahrzeugs sein. Ferner kann die weitere Funktion ein Aktivieren eines Menüs oder das Abgeben eines Rankings sein, d.h. einer detaillierten Bewertung.

Mit Vorteil kann ferner vorgesehen werden, dass das Verfahren ein Weiterleiten der Bewertung zusammen mit der bereitgestellten Information an einen Ort außerhalb des Fahrzeugs über eine Funkverbindung aufweist. Auf diese Weise kann beispielsweise die Bewertung dem Internet zugeführt werden.

Ferner wird die Aufgabe der Erfindung mit einem Fahrzeug gelöst, das das erfindungsgemäße Gestenbewertungssystem aufweist. Hierbei kann das Fahrzeug ein Personenfahrzeug sein oder ein Lastkraftfahrzeug. Ferner kann das Fahrzeug ein Elektrofahrzeug, ein Hybridfahrzeug oder ein herkömmliches Fahrzeug mit Verbrennungsmotor sein.

Es sei darauf hingewiesen, dass die hier beschriebenen Merkmale für eine Vorrichtung wie für ein Verfahren entsprechend zur Anwendung kommen können und beliebig miteinander kombiniert werden können.

Das Prinzip der vorliegenden Erfindung wird nun anhand eines Beispiels in den beigefügten Zeichnungen näher erläutert. Hierbei zeigen:
Fig. 1 eine schematische Darstellung eines Gestenbewertungssystems in einem Fahrzeug; und
Fig. 2 eine beispielhafte Geste zur Bewertung einer Information.

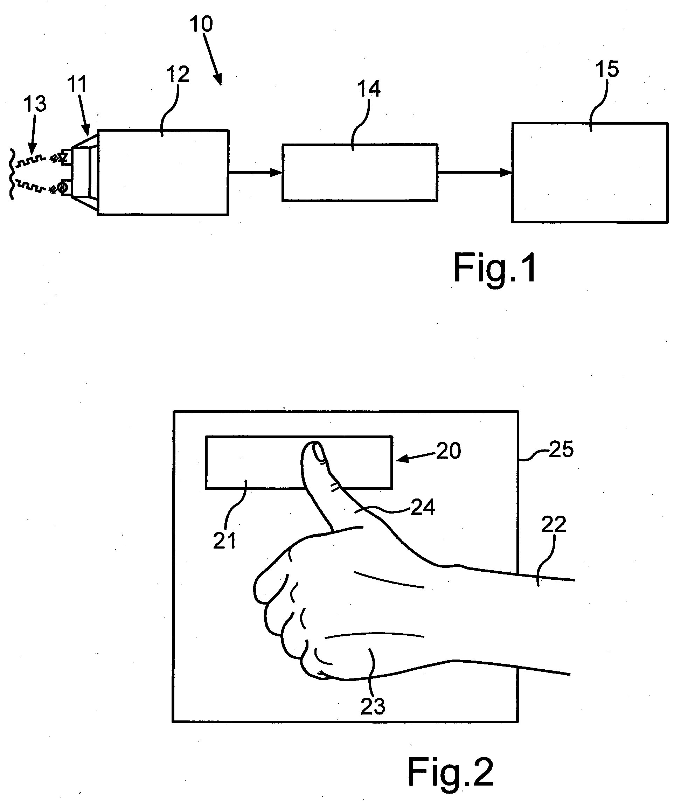

Fig. 1 zeigt ein Ausführungsbeispiel eines Gestenbewertungssystem 10, das in einem Fahrzeug, nicht dargestellt, installiert ist. Das Gestenbewertungssystem 10 weist einen optischen Sensor 11 auf, der den Innenraum des Fahrzeugs vermisst. Der optische Sensor 11 ist im vorliegenden Fall ein PMD-Sensor und Teil einer Time of Flight Kamera 12 (ToF-Kamera). Der optische Sensor 11 kann die Geometrie des Innenraums des Fahrzeugs erfassen einschließlich Insassen und deren Bewegungen. Dies kann beispielsweise durch Reflexion von ausgesandter Infrarotstrahlung 13 der ToF-Kamera geschehen.

Ferner weist das Gestenbewertungssystem 10 der Fig. 1 eine Berechnungseinheit 14 auf, mit der Signale des optischen Sensors 11 ausgewertet werden. Die Berechungseinheit 14 kann Teil eines Steuergerätes im Fahrzeug sein, beispielsweise einer ECU (= Eletric Control Unit). Die Berechnungseinheit 14 steht mit einer Verwertungseinheit 15 in Wirkverbindung, wobei die Verwertungseinheit 15 eine Geste, die durch die Kamera 12 und der Berechungseinheit 14 erkannt wurde, weiter verarbeitet und somit verwertet. Die Verwertung kann dadurch erfolgen, dass einer Einrichtung im Fahrzeug die Bewertung zur Verfügung gestellt wird und zusammen mit einer bewerteten Information in einem Datenspeicher abgelegt wird. Wird die bewertete Information zu einem späteren Zeitpunkt wieder aufgerufen, so kann die hierzu gespeicherte Bewertung zusätzlich zu der eigentlichen Information bereitgestellt werden.

Zur Bewertung einer Geste vermisst der optische Sensor 11 den Innenraum eines Fahrzeugs inklusive den Insassen im Innenraum. In der Verarbeitungseinheit, die als Berechnungseinheit ausgebildet ist, werden die Signale ausgewertet und dem Fahrzeug-Managementsystem zur Reaktion zur Verfügung gestellt. Hierbei können die Gliedmaßen einer Person einwandfrei extrahiert werden, wodurch die Position von Fingerspitzen jederzeit ermittelt werden kann. Verfolgt man die Trajektorie mit Position und Geschwindigkeit, so können Gesten extrapoliert werden. Eine Auslösung der Funktion "Like" oder "iLike", d.h. ein angehobener Daumen, wird möglichst nur bei ruhig gehaltener Hand durchgeführt.

Fig. 2 zeigt eine beispielhafte Geste 20 zur Bewertung einer Information 21 mit dem Gestenbewertungssystem 10 der Fig. 1. Das Gestenbewertungssystem 10 befindet sich in einem Fahrzeug, in der eine Person mit einer Geste eine bereitgestellte Information 21 bewertet. Hierbei wird die Information auf einer Anzeigefläche dargestellt. Die Information kann hierbei direkt auf einem Bildschirm oder Display dargestellt werden oder im Raum projiziert werden.

Als Reaktion auf die bereitgestellte Information 21 gibt die Person im Fahrzeug eine Bewertung durch die Geste 20 ab. In Fig. 2 ist ein ausgestreckter Arm 22 der Person gezeigt, die eine Geste 20 anhand einer geballten Faust 23 mit einem nach oben gerichteten Daumen 24 bereitstellt. Diese Geste 20 kann von dem in Fig. 1 gezeigten Gestenbewertungssystem 10 erkannt werden, um ausgewertet zu werden und schließlich um eine Bewertung mit einer Information zu speichern, die mit der Geste 20 bewertet wurde.

Die Information 21 ist im vorliegenden Ausführungsbeispiel ein Musikstück, das während der Bewertung abgespielt wird. Die angezeigte Information 21 ist beispielsweise ein Video zu dem Musikstück oder die Angabe des Titels des Musikstücks. Die Bewertungsgeste 20 ist vorzugsweise ein Daumen an einer zur Faust gekrümmten Hand, wobei der Daumen nach oben gerichtet ist, wie in Fig. 2 gezeigt. Dies bedeutet, dass das optische System 11, 12 im Fahrzeug so ausgebildet ist, dass es eine Hand mit aufgerichtetem Daumen 24 erkennt. Diese Geste 20 wird als positive Bewertung hinterlegt und zusammen mit dem bewerteten Musikstück abgespeichert. Die Bewertungsinformation kann zu einem späteren Zeitpunkt, beispielsweise zur Auswahl von Musiktiteln herangezogen werden, so dass beispielsweise nur Musiktitel abgespielt werden, die mit einer positiven Bewertung hinterlegt sind.

Es ergibt sich dann eine Favoritenliste mit positiv bewerteten Musikstücken. Ferner kann eine solche Favoritenliste mit weiterer Information versehen werden, beispielsweise nicht nur mit einer Positivbewertung, sondern auch mit einer Gewichtung, einem so genannten Ranking. Hierbei können beispielsweise Sterne oder Punkte vergeben werden, wobei die Anzahl der Sterne oder Punkte mit dem Grad der Bewertung korrespondiert. Dies bedeutet, dass beispielsweise fünf Sterne oder Punkte innerhalb einer positiven Bewertung die höchste Bewertung erhält, während ein Stern oder ein Punkt eine niedrigste Bewertung innerhalb der positiven Bewertung erhält. Diese Abstufung mit Sternen oder Punkten kann beispielsweise erfolgen, indem nach der Erkennung einer Bewertungsgeste durch das optische System 11, 12 eine weitere Eingabemöglichkeit aktiviert wird, beispielsweise durch das Display 25, das dazu auffordert, zusätzlich zu der erkannten Geste noch eine detaillierte Bewertung anhand von Sternen oder Punkten abzugeben. Hierbei kann beispielsweise in der Mittelkonsole des Fahrzeugs ein Eingabegerät oder ein Bedienpanel verwendet werden, das mechanische Tasten oder virtuelle Tasten zur Verfügung stellt, so dass die weitere Bewertung eingegeben werden kann. Auch ist es möglich, dass Sprache erkannt wird, indem beispielsweise eine Zahl genannt wird und diese Zahl als Grad der Bewertung hinterlegt wird, beispielsweise die Zahl "vier" für die Bewertung mit vier Sternen oder Punkten. Eine weitere Möglichkeit ist, dass die Dauer einer Geste dazu zu verwenden, um eine Gewichtung der Bewertung zu ermöglichen. Hierbei kann die Dauer einer Geste mit der Gewichtung der Bewertung korrespondieren. Dies bedeutet, dass ein für längere Zeit, beispielsweise fünf Sekunden, oben gehaltener Daumen eine höhere Bewertung auswirkt als ein Daumen, der nur für zwei Sekunden nach oben gehalten wird.

Einen ähnliche Anwendung eines Gestenbewertungssystems in einem Fahrzeug kann mit einem Navigationssystem erfolgen. Hierbei können während der Fahrt Orte, Sehenswürdigkeiten, Hotels, Theater, etc. eingeblendet werden, die bewertet werden können, indem eine Bewertungsgeste von dem optischen System im Fahrzeug erkannt wird und dann zusammen mit Information des Navigationssystems hinterlegt wird. So ist es beispielsweise möglich, dass man ein Restaurant auf einfache Weise wieder auffinden kann, indem man Favoriten in dem Navigationssystem hinterlegt und diese auswählen kann, um einen Zielort festzulegen.

Es wird demnach vorgeschlagen, die physikalisch einwandfreie Ortbarkeit des Insassen (z.B. durch eine Time of Flight Kamera), bzw. von Körperteilen des Insassen Gesten bzw. Handkonfigurationen zu erkennen. Hält man die Hand mit aufgerichtetem Daumen, wie in Fig. 2 gezeigt, vor eine Anzeigevorrichtung 25, hier ein Display so kann der gerade abgespielte Musiktitel oder Track bewertet bzw. "geliked" werden. Zum einen kann eine Bewertung für die Audioanlage bzw. für den Player erfolgen, zum anderen kann der Track als "Gefällt mir" in der personalisierten Facebook Pinnwand aufgeführt werden. Es wird eine sogenannte "iLike" Geste erkannt.

Hierbei ergeben sich folgende Vorteile: Das Empfinden des Nutzers wird positiv beeinflusst, d.h. es entsteht ein "Joy of Use Faktor" für den Nutzer/User. Es ist im Fahrzeug kein Taster für diese Bewertung notwendig. Hierbei sind Einsparungen von Kosten für Taster und positiver Designeffekt von Vorteil. Ferner entsteht ein durchgängiges Verbindungskonzept bzw. "Connect-Konzept".

Insgesamt ist die vorgeschlagene Gestenbewertung in einem Fahrzeug vielseitig einsetzbar. Auch können weitere Systeme in die Gestenerkennung mit eingeschlossen werden, wie beispielsweise eine Informationsweiterleitung der Bewertung in das Internet. Hierzu kann das Fahrzeug selbst eine Internetverbindung herstellen oder über eine weitere Kommunikationsverbindung, beispielsweise zu einem Service-Center des Autoherstellers eine Funkverbindung aufbauen und dann in dem Service-Center die Daten gespeichert werden und gegebenenfalls, beispielsweise aufgrund einer gewählten Profileinstellung des Benutzers, an verschiedene Einrichtungen, wie das Internet, wie bestimmte Social Media Foren im Internet, wie eine Homepage, etc. weitergeleitet werden.

## Patentansprüche

1. Kraftfahrzeug mit einem Gestenbewertungssystem aufweisend ein System (11, 12), das dazu ausgebildet ist, eine Geste (20) zu erkennen;
eine Verarbeitungseinheit (14), die mit dem System (11, 12) gekoppelt ist und die dazu ausgebildet ist, die erkannte Geste (20) auszuwerten;
eine Verwertungseinheit (15), die dazu ausgebildet ist, eine Bewertung, die aus der Geste (20) erkannt wurde, zusammen mit einer bewerteten Information abzuspeichern,
**dadurch gekennzeichnet, dass**
das System (11, 12) ein optisches System (11, 12) ist, wobei mit dem Gestenbewertungssystem eine Zeitdauer der Geste (20) erkennbar ist und im Anschluss an die Bewertung in Abhängigkeit von der Zeitdauer der Geste (20) eine weitere Funktion des Gestenbewertungssystems, die ein Einleiten eines Bedienvorgangs einer Vorrichtung darstellt, aktivierbar ist.

2. Kraftfahrzeug nach Anspruch 1, wobei die Verwertungseinheit (15) Teil eines Fahrzeug-Managementsystems ist.

3. Kraftfahrzeug nach Anspruch 1 oder Anspruch 2, wobei die erkannte Geste ein aufgerichteter Daumen ist, vorzugsweise ein rechter Daumen einer Person.

4. Kraftfahrzeug nach einem der Ansprüche 1 bis 3, wobei die Information eine Information ist ausgewählt aus einem Musiktitel, einem Ort, einer Dienstleistungseinrichtung, eines Bildes, einer Grafik, einer Statusinformation, einer physikalischen Größe, eines Messwertes, eines Geräusches und eines Vorschlags.

5. Kraftfahrzeug nach einem der Ansprüche 1 bis 4, wobei die Information auf einer Anzeigevorrichtung des Fahrzeugs bereitgestellt wird.

6. Verfahren zum Bewerten von Information, die von einem installierten Gerät in einem Fahrzeug bereitgestellt wird, aufweisend
Bereitstellen einer Information in einem Fahrzeug;
Erkennen einer Geste, die sich auf die bereitgestellte Information bezieht;
Auswerten der Geste als Bewertung in Bezug auf die bereitgestellte Information;
Speichern der Bewertung zusammen mit der bereitgestellten Information **dadurch gekennzeichnet, dass**
mit dem Gestenbewertungssystem eine Zeitdauer der Geste erkannt wird und im Anschluss an die Bewertung und in Abhängigkeit der Zeitdauer der Geste eine weitere Funktion des Gestenbewertungssystems, die ein Einleiten eines Bedienvorgangs einer Vorrichtung des Fahrzeugs darstellt, aktiviert wird.

7. Verfahren nach Anspruch 6, ferner aufweisend Weiterleiten der Bewertung zusammen mit der bereitgestellten Information an einen Ort außerhalb des Fahrzeugs über eine Funkverbindung.

## Claims

1. Motor vehicle with a gesture evaluation system comprising a system (11, 12) configured to detect a gesture (20);
a processing unit (14) coupled to the system (11, 12) and configured to analyse the detected gesture (20);
a utilisation unit (15) configured to store an evaluation ascertained from the gesture (20) together with evaluated information,
**characterised in that**
the system (11, 12) is an optical system (11, 12), wherein the gesture evaluation system is configured to detect a time period of the gesture (20) and, after the evaluation, a further function of the gesture evaluation system representing an initiating of an operation of a device can be activated based on the time period of the gesture (20).

2. Motor vehicle according to claim 1, wherein the utilisation unit (15) is part of a vehicle management system.

3. Motor vehicle according to claim 1 or claim 2, wherein the detected gesture is an upright thumb, preferably a right-hand thumb of a person.

4. Motor vehicle according to any of claims 1 to 3, wherein the information is an information selected from a song, a location, a service facility, an image, a graphic, status information, a physical variable, a measurement value, a sound and a suggestion.

5. Motor vehicle according to any of claims 1 to 4, wherein the information is provided on a display device of the vehicle.

6. Method for evaluating information provided by a device installed in a vehicle, comprising
providing information in a vehicle;
detecting a gesture that relates to the provided information;
analysing the gesture to obtain an evaluation with respect to the provided information;
storing the evaluation together with the provided information,
**characterised in that**
the gesture evaluation system detects a time period of the gesture and, after the evaluation and based on the time period of the gesture, a further function of the gesture evaluation system representing an initiating of an operation of a device of the vehicle is activated.

7. Method according to claim 6, further comprising transmitting the evaluation together with the provided information to a location external to the vehicle via a radio link.

## Revendications

1. Véhicule automobile avec un système d'évaluation de gestes comportant
un système (11, 12), qui est conçu pour reconnaître un geste (20) ;
une unité de traitement (14), qui est couplée au système (11, 12) et qui est conçue pour évaluer le geste (20) reconnu ;
une unité d'utilisation (15), qui est conçue pour mémoriser une évaluation, qui a été reconnue à partir du geste (20), conjointement à une information évaluée,
**caractérisé en ce que** le système (11, 12) est un système optique (11, 12),
dans lequel une durée du geste (20) peut être reconnue avec le système d'évaluation de gestes et, à la suite de l'évaluation, une autre fonction du système d'évaluation de gestes, laquelle autre fonction représente un déclenchement d'une opération de commande d'un dispositif, peut être activée en fonction de la durée du geste (20).

2. Véhicule automobile selon la revendication 1, dans lequel l'unité d'utilisation (15) fait partie d'un système de gestion de véhicule.

3. Véhicule automobile selon la revendication 1 ou 2, dans lequel le geste reconnu est un pouce dressé, de préférence un pouce droit d'une personne.

4. Véhicule automobile selon l'une quelconque des revendications 1 à 3, dans lequel l'information est une information choisie parmi un titre de musique, un lieu, un dispositif de prestation de services, une image, un graphique, une information d'état, une grandeur physique, une valeur de mesure, un bruit et une proposition.

5. Véhicule automobile selon l'une quelconque des revendications 1 à 4, dans lequel l'information est présentée sur un dispositif d'affichage dans un véhicule.

6. Procédé d'évaluation d'une information qui est fournie par un appareil installé dans un véhicule, comportant
la fourniture d'une information dans un véhicule ;
la reconnaissance d'un geste qui se rapporte à l'information fournie ;
l'évaluation du geste comme évaluation par rapport à l'information fournie ;
la mémorisation de l'évaluation conjointement à l'information fournie,
**caractérisé en ce que**, avec le système d'évaluation de gestes, une durée du geste est reconnue et, à la suite de l'évaluation, une autre fonction du système d'évaluation de gestes, laquelle autre fonction représente un déclenchement d'une opération de commande d'un dispositif du véhicule, est activée en fonction de la durée du geste.

7. Procédé selon la revendication 6, comportant en outre la retransmission de l'évaluation conjointement à l'information fournie vers un lieu en dehors du véhicule par l'intermédiaire d'une liaison radio.
